# EUROPEAN PATENT APPLICATION

(11) **EP 2 608 053 A1**
(43) Date of publication of application: **26.06.2013**
(21) Application number: 11194394.0
(22) Date of filing: 19.12.2011
(51) Int. Cl.: G06F 17/30

(54) **Communication device and method**

(71) Applicant: Koninklijke KPN N.V., 2516 CK The Hague (NL)
(72) Inventor: Alberts, Albert, 9723 AJ Groningen (NL); Steenbergen, van, Ate, 9737 NN Groningen (NL)
(74) Representative: Wuyts, Koenraad Maria

(57) **Abstract**

An electronic communication device (500) comprising a receiving device configured to receive, from multiple external servers (300, 400), digital files (210, 220, 230) together with respective associated origin identifiers (320, 410), an origin identifier indicating a device from which the associated digital file originated, a storing device configured to store the digital files in a non-volatile electronic storage at a respective corresponding storage location, an indexer configured to determine a sender identifier from an origin identifier, the sender identifier indicating a user of the device indicated by the origin identifier, a database configured to store a pointer linking the determined sender identifier to the corresponding storage location, a communication device (550) configured to establish a real-time communication between the electronic communication device (500) and an external communication device, a query device (560) configured to determine a current sender identifier for the real-time communication, and to query the database for storage locations linked to the current sender identifier, and a display device configured to retrieve a digital file from the queried storage location and to display at least part of the retrieved digital file simultaneous with the real-time communication.

## Description

### FIELD OF THE INVENTION

The invention relates to an electronic communication device comprising a receiving device configured to receive digital files from multiple external servers, a storing device configured to store the digital files in a non-volatile electronic storage at a respective corresponding storage location, a communication device configured to establish a real-time communication between the electronic communication device and an external communication device.

The invention further relates to a method for real-time communication and corresponding computer program.

### BACKGROUND OF THE INVENTION

Modern electronic communication devices, such as smart phones, that are configured to establish a real-time communication with other communication device, often include further communication capabilities.

For example such communication devices may include a receiving device configured to receive digital files. For example, a mobile phone may include a web browser through which images are downloaded from image sharing servers, such a Flickr or Picasa or text files may be obtained from profile sites such as Linkedln or from blogs such as hosted on Blogspot. These digital files may be stored in a non-volatile electronic storage for later access.

However, the proliferation of external servers from which users may acquire these files, and the many different file types, protocols and the like, have made communication less efficient.

In particular, when one uses the electronic communication devices for real-time communication, one may be vaguely aware that information relating to the communication exists, but one is not able to quickly find it. Existing solutions such as file search do not sufficiently address this concern, since they require user intervention. Moreover the user must be aware of a sufficiently accurate search term, such as a file name. The problem is particularly pronounced when a call is received since the user lacks preparation time.

### SUMMARY OF THE INVENTION

It is an object of the invention to improve finding files relevant to a current real-time communication.

An advantageous electronic communication device comprises a receiving device configured to receive, from multiple external servers, digital files together with respective associated origin identifiers, an origin identifier indicating a device from which the associated digital file originated, a storing device configured to store the digital files in a non-volatile electronic storage at a respective corresponding storage location, an indexer configured to determine a sender identifier from an origin identifier, the sender identifier indicating a user of the device indicated by the origin identifier, a database configured to store a pointer linking the determined sender identifier to the corresponding storage location, a communication device configured to establish a real-time communication between the electronic communication device and an external communication device, a query device configured to determine a current sender identifier for the real-time communication, and to query the database for storage locations linked to the current sender identifier, and a display device configured to retrieve a digital file from the queried storage location and to display at least part of the retrieved digital file simultaneous with the real-time communication.

When a digital file is downloaded through the receiving device, a sender identifier is determined. A pointer is saved that points from the sender identifier to the location where the digital file is stored. Later when the device is used for a real-time communication, the files may be found efficiently by looking up the sender identifier. In this way, files that are relevant to the current communication may be shown to the user. Reminding him of relevant information which may be used in the current communication.

The electronic communication device may be a desktop computer, or a mobile electronic communication device such as a tablet, netbook, laptop, smart phone or the like. Advantageously, the electronic communication device is wirelessly connected both for the receiving of digital files and for real-time communication.

The receiving device may comprises a browser, or other application software, such as an 'app', configured for downloading digital information from an external provider of digital information. Typically the receiving device will receive the file over the internet, through a wireless connection, for example a Wi-Fi connection. For that purpose, the electronic device may comprise a Wi-Fi adapter.

The device may connect to multiple different external servers, for example: to image or video servers, such as Flickr or YouTube; to file servers, e.g., through a file sharing program, e.g., BitTorrent; to an e-mail server, e.g., through an e-mail program such as Outlook; to a profile site, such as Linkedln; to a blog site, e.g., Facebook, Google+, blogger etc.

Accordingly, the digital files may take many forms, corresponding to the example servers given above, the digital file may be an: image, a video, a text file, an e-mail, an e-mail attachment, a profile, a webpage, and the like.

An origin identifier may be an IP address or MAC address, i.e., a network address of the computer that uploaded the digital file to the external computer for later receiving (downloading) by the electronic communication device. The origin identifier may also be a URL, in particular a URL that contains an identifier identifying a user of the external server. For example, the URL may comprise a part that is user independent and a part that is user dependent. The user dependent part may include a part identifying a user and a part identifying a digital file, say a photo. For example, a Flickr URL may be: www.flickr.com/photos/user_name /1234456/. The part www.flickr.com/photos/ is the same for all users, the user_name indicates a user of the Flickr server, and the number 1234456 indicates a particular picture in that users account.

An origin identifier may be added by an external server for the purpose of later retrieval of the file through the invention. For example, at least one of the multiple external servers may comprise a file receiver configured to receive the digital file from the device originating the digital file, an origin recorder for recording an origin identifier indicating the device from which the digital file originated, a downloader configured to make the digital file available for receiving (downloading) together with the origin identifier by the electronic communication device.

The non-volatile electronic storage may be a local non-volatile electronic storage comprised in the electronic communication device. The non-volatile electronic storage may also be located on a different server, e.g., as a cloud service. The non-volatile electronic storage may be flash memory or magnetic memory, e.g., a hard drive, etc.

The storage location may be indicated as an entry of a file system, or as a URL, etc.

The indexer typically maps multiple origin identifiers to the same sender identifier. For example, if a user creates files on multiple file servers using multiple IP addresses, each one of the IP address is a suitable origin identifier, the IP address may however be mapped onto the same sender identifier. Also origin identifiers such as URLs may be mapped to the same sender identifier. A sender identifier is unique for the database and the user. Preferably, the sender identifier is globally unique identifier (e.g. a 'guid'). The latter is advantageous if multiple electronic communication devices synchronize their databases with a same external database.

Real-time communications is any mode of telecommunications in which at least two users can exchange information instantly or with negligible latency. Real-time communication can is preferably full-duplex. A real-time communication may include audio communication, e.g., a telephone communication, e.g., over GSM, or a video conference. The real-time communication may be an online chat. The real-time communication may be a telephone call over the SIP protocol, e.g., following RFC 3261 or 2543.

The query device may determine an origin identifier, e.g., an IP address, for the real-time communication and determine the sender identifier from that, e.g., using the indexer. The query device may determine the sender identifier from the origin identifier.

The display device may include a retriever device configured to retrieve a digital file from the queried storage location and a displaying unit configured to display at least part of the retrieved digital file simultaneous with the real-time communication. For example, the displaying unit may be a visual display, e.g., an LCD display, an OLED display, an e-ink display and the like.

In a simple embodiment the sender identifier is the same as the origin identifier. This has the disadvantage that a single user that makes files available through different hardware, is not seen as a single user by the communication device. Having these identifiers the same is particularly advantageous when the origin identifier is an IP address. In a more advanced embodiment, at least two different origin identifiers are mapped to same sender identifier by the indexer. In an embodiment at least two, preferably three, of the following list are mapped to the same sender identifier: an e-mail address, a URL, an IP address.

In an embodiment, the storing device comprises non-volatile electronic storage, and the electronic communication device comprises a synchronizer to synchronize the content of the non-volatile electronic storage with an external non-volatile electronic storage.

A user may want to have a first and second electronic device according to the invention, say a tablet and a smart phone. In that case the database may be synchronized with an external database. In that way, both the first and second electronic devices can keep an up-to-date database. Communication done with one device may be found with the other device. Advantageously, the non-volatile storage comprises (or consists of) an external storage. In that case the external storage may be shared between the first and second electronic device. Preferably, both the database and the storage are synchronized with a copy on a server.

The electronic device may be a mobile electronic device, e.g., a mobile phone. The electronic device may also be a set-top box, a computer, etc.

An aspect of the invention concerns an electronic communication system comprising an electronic communication device, multiple external servers and the external communication device.

In an embodiment, the electronic communication device comprises an external non-volatile electronic storage, wherein the external non-volatile electronic storage is configured to cache digital files from the external server to reduce synchronization time between the electronic communication device and the external non-volatile electronic storage.

The external non-volatile electronic storage may preload new files that occur on external servers. For example, the external non-volatile electronic storage may download files from accounts that are accessed most often, or more than a predetermined amount. For example, the external non-volatile electronic storage may determine that photos of a particular user of a particular image server are often received (i.e. downloaded) by the user of the electronic communication device. The external non-volatile electronic storage can reduce synchronization time of storage by downloading new files, e.g., photos of the particular user of the particular server, e.g. image server, in advance, anticipating that the they will be needed.

In an embodiment, the external server is an e-mail server, and wherein the e-mail server is configured to attach to an e-mail one of the MAC address or the IP address of a sender of the e-mail.

A further aspect of the invention concerns a method for real-time communication comprising receiving, from multiple external servers, digital files together with respective associated origin identifiers, an origin identifier indicating a device from which the associated digital file originated, storing the digital files in a non-volatile electronic storage at a respective corresponding storage location, determining a sender identifier from an origin identifier, the sender identifier indicating a user of the device indicated by the origin identifier, storing in a database a pointer linking the determined sender identifier to the corresponding storage location, establishing a real-time communication between an electronic communication device and an external communication device, determining a current sender identifier for the real-time communication, and to query the database for storage locations linked to the current sender identifier, and retrieving a digital file from the queried storage location and displaying at least part of the retrieved digital file simultaneous with the real-time communication.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc. Preferably, the computer program product comprises non-transitory program code means stored on a computer readable medium for performing a method according to the invention when said program product is executed on a computer

A further aspect of the invention concerns a computer program comprising computer program code means adapted to perform all the steps of a method according to the invention when the computer program is run on a computer, the computer comprising a receiving device configured to receive data from a digital network, a storing device configured to store digital data, a communication device configured to establish a real-time communication between the electronic communication device and an external communication device, a display device configured to display data.

In a preferred embodiment, the computer program comprises computer program code means adapted to perform all the steps of a method according to the invention when the computer program is run on a computer. Preferably, the computer program is embodied on a computer readable medium.

### BRIEF DESCRIPTION OF THE DRAWINGS

The invention is explained in further detail by way of example and with reference to the accompanying drawings, wherein:
Figure 1 is a block diagram illustrating an electronic communication system,
Figure 2 is a block diagram illustrating a database,
Figure 3 is a block diagram illustrating an electronic communication system,
Figure 4 is a block diagram illustrating an electronic communication system,
Figures 5a and 5b are flow diagrams illustrating communication methods,
Figures 6a and 6b are flow diagrams illustrating communication methods,
Figure 7 is a block diagram illustrating data relationships.

Throughout the Figures, similar or corresponding features are indicated by same reference numerals.

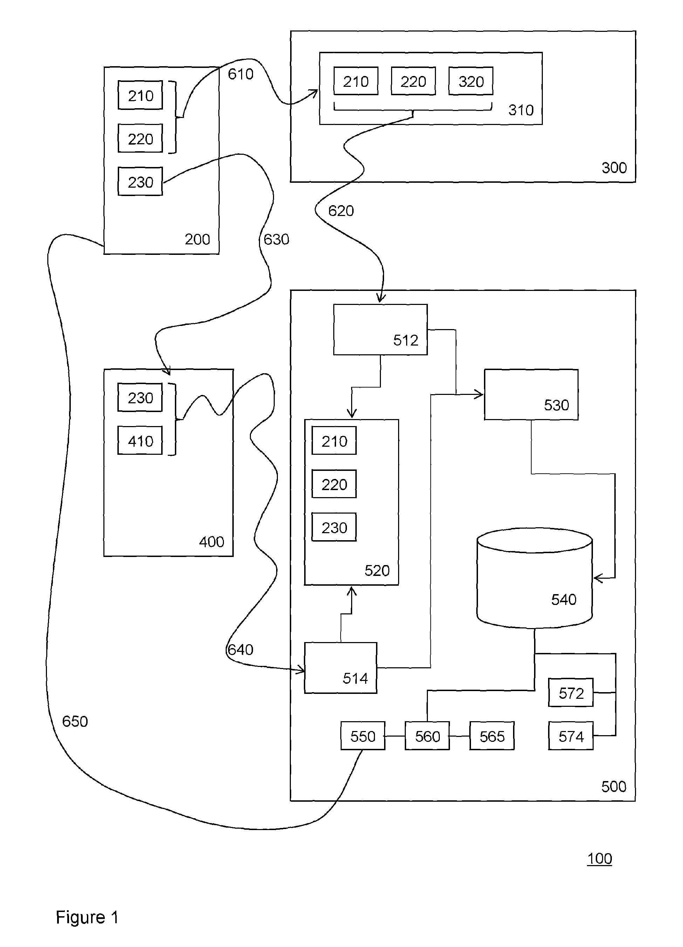

### List of Reference Numerals in Figure 1

- 100: an electronic communication system
- 200: a computer
- 210: an e-mail
- 220: an attachment
- 230: a picture
- 300: an email server
- 310: an email box
- 320: an identifier
- 400: a public sharing server
- 410: an identifier
- 500: an electronic communication device
- 512: an e-mail receiver
- 514: a file receiver
- 520: a storage
- 530: an indexer
- 540: a database
- 550: a communication device
- 560: a query device
- 565: a display device
- 572: a synchronizer
- 574: a database updater
- 610, 620, 630,640, 650: a connection

### DETAILED EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

Figure 1 illustrates in schematic form an electronic communication system 100.

Communication system 100 comprises devices from which the digital files originate. Typically, there will be many of such devices. Figure 1 shows one such device: computer 200. Computer 200 may be a desktop computer or a mobile device, say a mobile phone. Computer 200 may be used by one or more users. A user of originating devices may use multiple devices to disseminate files. If computer 200 is used by multiple users then this may be taken into account by assign different sender identifiers to them (see also below), however for simplicity all users of a single device may be considered as a single user. We will assume that computer 200 has a single user.

Communication system 100 comprises an electronic communication device 500 which is capable both of real-time communications, say with computer 200, and of non-real time communication, say e-mail and file download.

Communication system 100 comprises multiple servers which are external to communication device 500. Figure 1 shows two external servers an email server 300, and a public sharing server 400. Sharing server 400 may for example be an image server.

On computer 200 there are multiple digital files. Figure 1 shows three of the files on computer 200, there may be more or less files; shown is an e-mail 210 with a corresponding attachment 220 and a picture 230. Attachment 220 may be any kind of file, say a word file, or a picture. Picture 230 may be taken with a camera comprised in computer 200.

Computer 200 is connected to email server 300 through a connection 610. Typically, connection 610 follows an internet protocol, such as SMTP.

Email server 300 has an email box 310 of the user of communication device 500. The user of computer 200 has e-mailed email 210 and attachment 220 to a user of communication device 500. The e-mail arrives at email server 300, which stores email 210 and attachment 220 in email box 310 until they are collected. Email server 300 is configured to obtain the IP address and/or MAC address of computer 200 and store it as an origin identifier 320 along with email 210 and attachment 220. In a simpler embodiment, origin identifier 320 may be the reply email address of email 210.

Computer 200 is connected to sharing server 400 through a connection 630, for example, an http connection. Picture 230 is uploaded to sharing server 400 which keeps the file along with origin information origin identifier 410. Origin identifier 410 could also be IP/MAC address of computer 200. Origin identifier 410 may also be an identifier used by sharing server 400 to distinguish the user of computer 200 from other users of sharing server 400. For example, origin identifier 410 may be a username used on sharing server 400. The username may be embedded in a URL that indicates picture 230. For example, an external server, such as server 200, may require a login to associate a user of device 200 with a username. The username may then be used in URL's of server 200, and later as origin identifier.

Communication device 500 comprises one or more receiving devices configured to receive digital files. In the embodiment shown in Figure 1, communication device 500 comprises an e-mail receiver 512 and a file receiver 514. For example, email receiver 512 may connect with email server 300, over a connection 620, say using POP3 or IMAP to receive email 210 and attachment 220. Email receiver 512 is configured to receive origin identifier 320 together with email 210 and attachment 220. Communication device 500 also comprises a file receiver 514. File receiver 514 receives digital files from sharing server 400 via a connection 640, for example, through the http protocol. File receiver 514 may comprise a browser, say Firefox or Internet Explorer. File receiver 514 receives origin identifier 410 together with picture 230. Email receiver 512 and file receiver 514 together receive files from multiple external servers.

Communication device 500 comprises a non-volatile storage 520, say flash memory. Figure 1 shows storage 520 in the state where it has received email 210, attachment 220, and picture 230. Communication device 500 further comprises an indexer 530. Indexer 530 is configured to map origin identifiers which correspond to external devices, such as computer 200 or to user names on servers such as sharing server 400 and map them to an internal identifier: the sender identifier. The system could work by having the sender identifier equal to the origin identifier in particular if the used origin identifiers are IP addresses, but the use of sender identifiers which are different is preferred, in particular multiple different origin identifiers may be mapped to a single sender identifier. Communication device 500 could also be made without its own storage; instead communication device 500 could store data at an external server, say in the cloud.

In one embodiment of indexer 530, indexer 530 comprises a list mapping origin identifies to sender identifiers. For example, the indexer may contain a list of origin identifiers and corresponding sender identifiers. For example, the list may contain any one of an e-mail address, an IP address, a MAC address, a usernames of external servers, etc, and a corresponding sender identifier. The list may be built incrementaly, for example, if an origin identifier is not on the list, the user is prompted to indicate the corresponding sender identifier, e.g., by selecting it from a list of sender identifers already on the list or by entering it.

For example, the indexer may contain information that maps a specific IP address, a user name, say Flickr `userfr', and an e-mail address, say frdrn@something.nl, all to the same sender identifier, say 'user8389'. The list may also map caller-id to sender identifiers. Caller-id may be obtained from querying device 560.

Communication device 500 comprises a database 540. Database 540 stores pointers from the sender identifier determined by indexer 530 to a storage location in storage 520. For example, if communication device 500 receives a specific digital file together with a specific origin identifier for which the indexer determines a specific sender identifier and which is stored at a specific storage location, then database 540 will store a pointer from that specific sender identifier to that specific storage location.

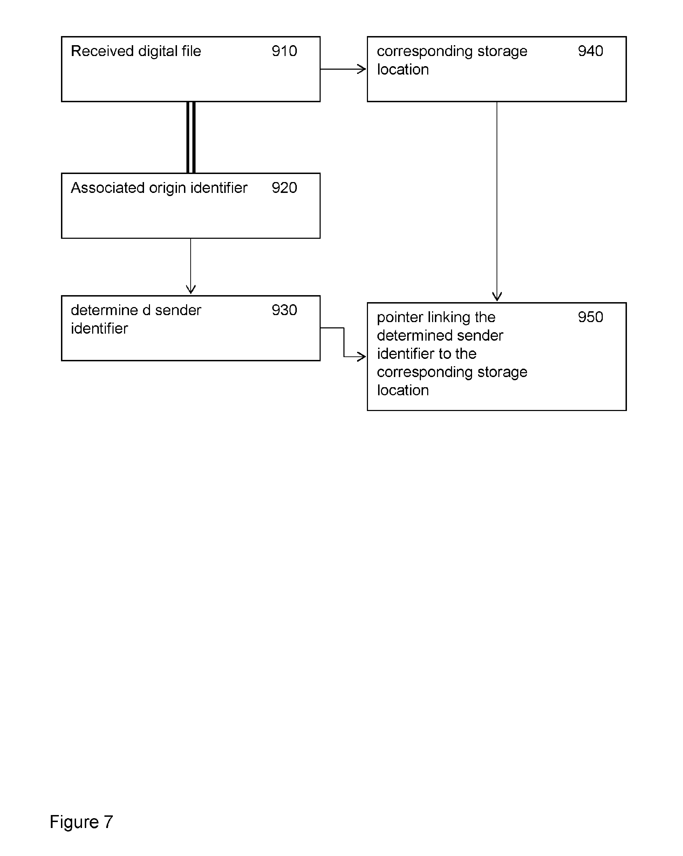

Figure 7 illustrates the relationship between the various data objects. A digital file 910 is received together with an associated origin identifier 920, indicated with a double line in figure 7. The received digital file 910 is stored at corresponding storage location 940. From the associated origin identifier 920 a sender identifier 930 is determined by the indexer. Finally, a pointer 950 is stored in database 540 which links the sender identifier to the corresponding storage location.

Communication device 500 further comprises a communication device 550, configured to establish a real-time communication between the communication device 500 and an external communication device, such as computer 200, e.g., through a connection 650. For example, communicator 550 may be an application running on communication device 500 that provides online chatting. Communication device 500 may also be a phone, in which case, communicator 550 may be a telephone device. Communication device 500 comprises a query device 560 configured to determine a current sender identifier for the real-time communication. Query device 560 may simply obtain an IP address for indicating the origin of the communication, but query device 560 may also make use of indexer 530 and map an origin identifier to a sender identifier that is different. For example, communicator 550 may accept the SIP protocol. Communicator 550 may accept calls with origin identifiers, e.g., an IP address (say from a SIP invite) or caller-id.

Query device 560 further queries the database 540 for storage locations linked to the current sender identifier.

Communication device 500 further comprises a display device 565 configured to retrieve a digital file from storage 520 from the storage location obtained by query device 560 from database 540. Display device 565 displays at least part of the retrieved digital file simultaneous with the real-time communication. If only few and short files are found in response to query device 560 queries, then display device 565 may show them in full. However, if more files or larger files are found display device 565 may use one of several strategies to show them. For example, display device 565 may show more recent files first. Display device 565 may show a slideshow, say a slideshow of images. Display device 565 may show summaries, e.g., automatically generated summaries from documents. Display device 565 may show clips from video clips. Other possibilities will suggest themselves to the person skilled in the art to reduce the amount of data to display.

Communication device 500 may comprise a synchronizer 572 to synchronize the content of the non-volatile electronic storage with an external non-volatile electronic storage. Communication device 500 may comprise a database updater 574 to synchronize database 540 with an externally stored copy of database 540. Preferably, communication device 500 comprise both synchronizer 572 and database updater 574.

Connections 610, 620, 630, and 640 are typically network connections, e.g., running over the internet. Connections 620 and 640 are often (partially) wireless connections. Connection 650 may be a GSM or SIP connection, etc.

One could obtain sender information from other sources than origin information, an alternative electronic communication device comprises a receiving device configured to receive digital files from multiple external servers 300, 400, a storing device configured to store the digital files in a non-volatile electronic storage at a respective corresponding storage location, an indexer configured to determine a sender identifier for the digital file, a database configured to store a pointer linking the determined sender identifier to the corresponding storage location, a communication device configured to establish a real-time communication between the electronic communication device and an external communication device, a query device configured to determine a current sender identifier for the real-time communication, and to query the database for storage locations linked to the current sender identifier, and a display device configured to retrieve a digital file from the queried storage location and to display at least part of the retrieved digital file simultaneous with the real-time communication. For example, the sender identifier may be an IP address or may be obtained by prompting the user for it, e.g., the user may select the sender identifier from a list upon receiving a digital file.

Database 540 may be configured to store the pointer linking the determined sender identifier to the corresponding storage location at a server, i.e. a database server, different from the communication device 500. In that case the electronic communication device 500 may comprise a database connection device to connect to the database server. The connection to database 540 may be done through a network, e.g., through the Internet. If the storage of database 540 is on-line, than query device 560 may be implemented by forwarding the query to the database. Also indexer 530 would send the data to be stored to the database server.

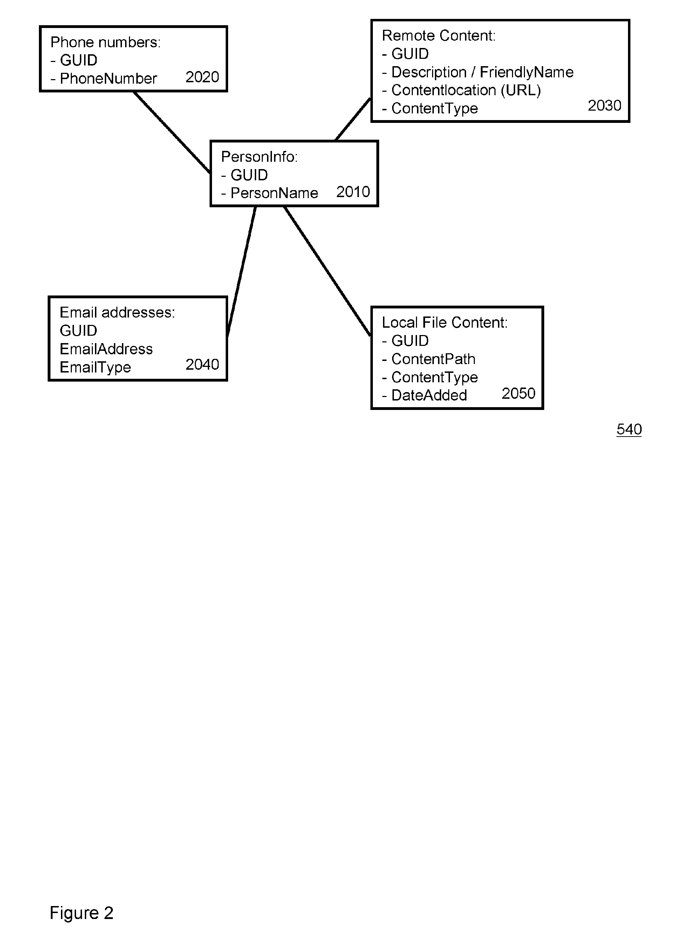

Figure 2 shows one way to organize database 540. All data is linked through a globally unique identifier (the GUID, which is a sender identifier) to one person. Phone numbers, email addresses, blog entries, photos on Picasa, notes on Facebook etc, may traced through the guid.

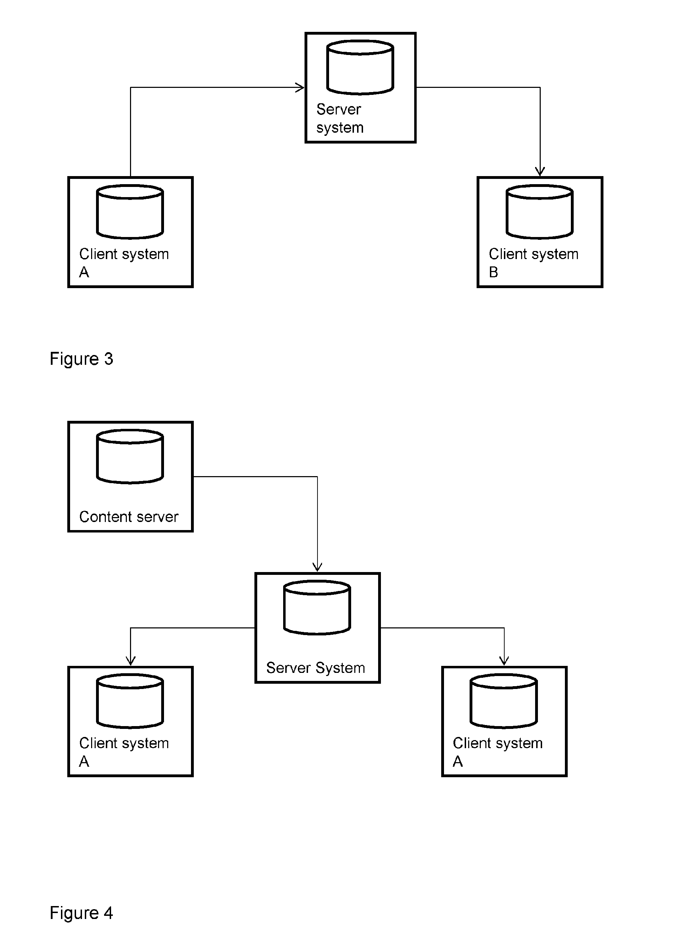

Figure 3 shows one way to organize synchronization of the storage 520 and/or database 540. Client systems A and B are both electronic communications devices according to the invention, e.g., as in figure 1. The central server stores a copy of the local database and/or storage and synchronizes it with the other clients. A client may even avoid storing the database and/or storage locally, for example on mobile devices with small storage capacity, by consulting the server instead.

Figure 4 show a further optimization. The server system may download the most recent items from external servers to a local cache.

In one embodiment communication system 100 may work as follows. A user of computer 200 sends a user of communication device 500 an e-mail 210 together with an attachment 220. Email 210 and attachment 220 arrive at email server 300 and is stored in the e-mail box of the user of communication device 500. Together with the storage an origin identifier is added to the e-mail and the attachment. The origin identifier contains the IP address and/or the MAC address of computer 200.

When communication device 500 retrieves the e-mail, email 210 and attachment 220 are stored in storage 520. At the same time the origin identifier is read. In database 540 two pointers are stored from the additional data field to the storage location of the e-mail and one from the origin identifier to attachment 220. The pointers may contain additional information such as a timestamp indicating the time of retrieval by communication device 500.

The user of computer 200 may upload pictures to his account on Flickr and Facebook. When these pictures are stored the server adds an origin identifier. When the user of communication device 500 sees these pictures he may store one or more on storage 520. Together with storing the pictures a pointer is stored from the origin identifier to the pictures stored in storage 520.

Later the user of computer 200 calls the user of communication device 500 with an IP phone. For example, an SIP invite is received by communication device 500. The SIP invite contains the IP address of the user of computer 200. Communication device 500 queries database 540 for the origin identifier, e.g., does a 'select' for the IP address of the user of computer 200. As a result the files, i.e., images, attachment, and pictures are found. If timestamps are also saved they may be used to sort the results.

When the user of communication device 500 accepts the call, the found files may be displayed, possibly as an icon ready for opening through an action of the user of communication device 500, say a click.

The files are categorized independent from the application or protocol used to retrieve them. Since the user of computer 200 may use multiple devices or multiple IP addresses, in a more advantageous embodiment the origin identifiers are mapped to a common sender identifier that belongs to the user of computer 200.

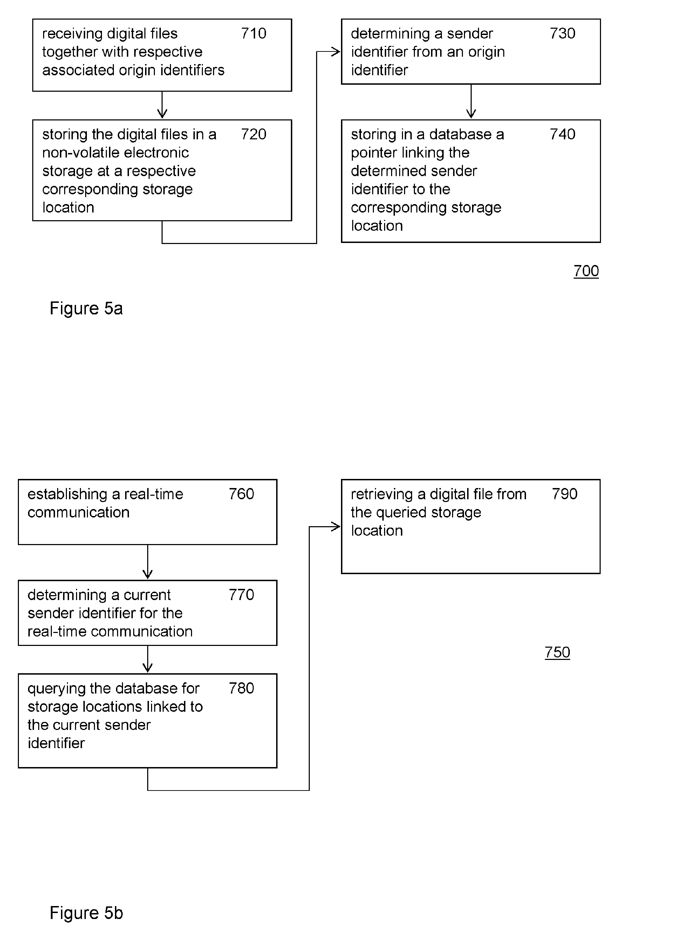

Figures 5a and 5b illustrates, in one possible sequence, in flowcharts two methods according to the invention.

Flowchart 5a shows how digital files may be received.

Step 710 shows receiving the digital files together with their respective associated origin identifiers. An origin identifier indicates a device from which the associated digital file originated. Preferably, the origin identifier indicates the device on which the digital file was created and/or was made public, say by uploading to file sharing and/or private message (say e-mail) server. Step 720 shows storing the received digital files in a non-volatile electronic storage at a respective corresponding storage location. The storage location where in the digital file is stored in the electronic storage. The storage location is suitable for its subsequent retrieval. Step 730 shows determining a sender identifier from an origin identifier. The sender identifier indicates a user of the device indicated by the origin identifier. Step 740 shows storing in a database a pointer linking the determined sender identifier to the corresponding storage location. Using the database storage locations may be obtained from which digital files may be retrieved that were originally retrieved with an origin identifier, from which a particular sender identifier was determined.

Figure 5b shows how digital files may be retrieved after they have been stored using the method of figure 5a. Step 760 shows establishing a real-time communication between an electronic communication device and an external communication device. Step 770 shows determining a current sender identifier for the real-time communication. For example, the real-time communication may have an associated origin identifier from which a sender identifier may be determined. Step 780 shows querying the database for storage locations linked to the current sender identifier. Step 790 shows retrieving a digital file from the queried storage location. For example the retrieved digital file may be displayed now, i.e. simultaneous with the real-time communication, or later subsequent to the real-time communication.

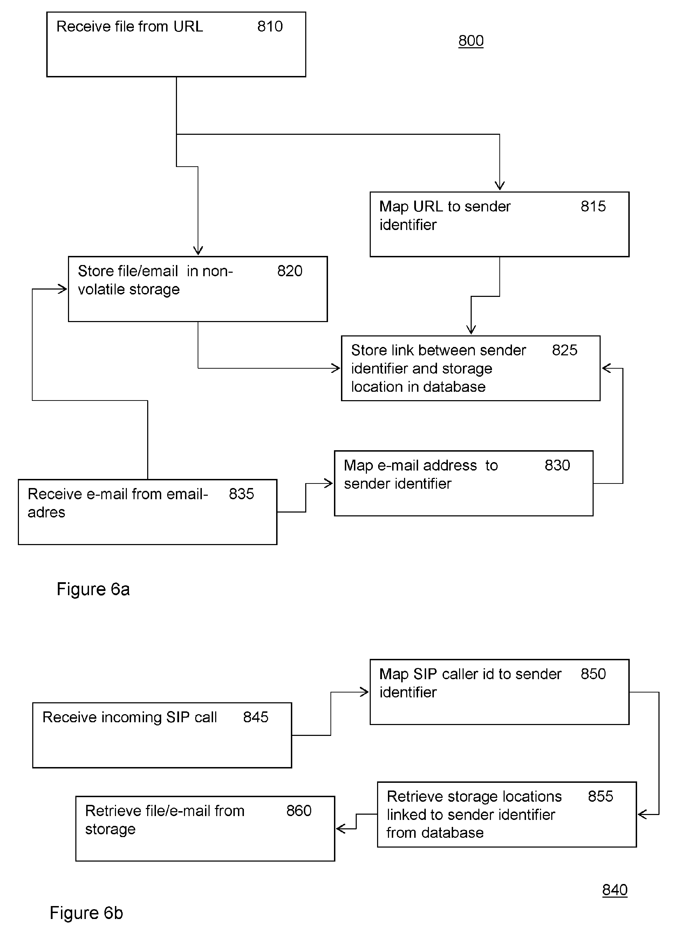

A possible sequence of events is also depicted in figures 6a and 6b. Flowchart 800 shows how files may be received and stored. Flowchart 840 shows how they are retrieved when a call is received. In step 810 a file is retrieved from a URL. The file is stored in step 820 and the URL is mapped to a sender identifier in step 815. A link between the sender identifier and the storage location is stored in step 825. In step 835 an e-mail is received with an e-mail address. The e-mail address is mapped to the same sender identifier in step 830. The email is stored in step 820 and a link from the sender identifier to the e-email storage location is stored in step 825.

Later some real-time form of communication is received, say a call, possibly using the SIP protocol, in step 845. A SIP id is mapped to a sender identifier in step 850. In step 855 the storage locations that correspond to that sender identifier are retrieved in step 855 from the database. In step 860 the corresponding files are retrieved for display in step 860.

Many different ways of executing the methods 700, 750, 800, 840, are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, steps 710 and 735 may be executed, at least partially, in parallel. Moreover, a given step may not have finished completely before a next step is started.

A method according to the invention may be executed using software, which comprises instructions for causing a processor system to perform methods 700, 750, 800, and/or 840. Software may only include those steps taken by a particular sub-entity of the system. The software may be stored in a suitable storage medium, such as a hard disk, a floppy, a memory etc. The software may be sent as a signal along a wire, or wireless, or using a data network, e.g., the Internet. The software may be made available for download and/or for remote usage on a server.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. An electronic communication device (500) comprising
- a receiving device configured to receive, from multiple external servers (300, 400), digital files (210, 220, 230) together with respective associated origin identifiers (320, 410), an origin identifier indicating a device from which the associated digital file originated,
- a storing device configured to store the digital files in a non-volatile electronic storage at a respective corresponding storage location,
- an indexer configured to determine a sender identifier from an origin identifier, the sender identifier indicating a user of the device indicated by the origin identifier,
- a database configured to store a pointer linking the determined sender identifier to the corresponding storage location,
- a communication device (550) configured to establish a real-time communication between the electronic communication device (500) and an external communication device,
- a query device (560) configured to determine a current sender identifier for the real-time communication, and to query the database for storage locations linked to the current sender identifier, and
- a display device configured to retrieve a digital file from the queried storage location and to display at least part of the retrieved digital file simultaneous with the real-time communication.

2. An electronic communication device as in Claim 1, wherein the storing device comprises non-volatile electronic storage, and wherein the electronic communication device comprises a synchronizer (572) to synchronize the content of the non-volatile electronic storage with an external non-volatile electronic storage.

3. An electronic communication device as in Claim 1, wherein the storing device is configured to store the digital file in an external non-volatile electronic storage.

4. An electronic communication system comprising an electronic communication device (500) as in any one of the preceding claims, the external server (300, 400) and the external communication device.

5. An electronic communication system as in Claim 4, wherein the electronic communication device (500) is an electronic communication device according to claim 2, and comprising an external non-volatile electronic storage, wherein the external non-volatile electronic storage is configured to cache digital files from the external server to reduce synchronization time between the electronic communication device and the external non-volatile electronic storage.

6. An electronic communication system as in Claim 4 or 5 wherein the external server is an e-mail server, and wherein the e-mail server is configured to attach to an e-mail one of the MAC address or the IP address of a sender of the e-mail.

7. Method for real-time communication comprising
- receiving, from multiple external servers (300, 400), digital files (210, 220, 230) together with respective associated origin identifiers (320, 410), an origin identifier indicating a device from which the associated digital file originated,
- storing the digital files in a non-volatile electronic storage at a respective corresponding storage location,
- determining a sender identifier from an origin identifier, the sender identifier indicating a user of the device indicated by the origin identifier,
- storing in a database a pointer linking the determined sender identifier to the corresponding storage location,
- establishing a real-time communication between an electronic communication device (500) and an external communication device,
- determining a current sender identifier for the real-time communication, and to query the database for storage locations linked to the current sender identifier,
- retrieving a digital file from the queried storage location and displaying at least part of the retrieved digital file simultaneous with the real-time communication.

8. A computer program comprising computer program code means adapted to perform all the steps of claim 7 when the computer program is run on a computer.

9. A computer program as claimed in claim 8 embodied on a computer readable medium.
